# FASCICULE DE BREVET EUROPEEN

(11) **EP 3 601 770 B1**
(45) Date de publication et mention de la délivrance du brevet: **27.11.2024**
(21) Numéro de dépôt: 18714579.2
(22) Date de dépôt: 15.03.2018
(51) Int. Cl.: F02D 41/00, F02D 41/12

(54) **PROCEDE DE CONTROLE D'UN MOTEUR A ALLUMAGE COMMANDE SURALIMENTE AVEC RECIRCULATION PARTIELLE DES GAZ D'ECHAPPEMENT, ET DISPOSITIF DE MOTORISATION ASSOCIE**
VERFAHREN ZUR STEUERUNG EINES AUFGELADENEN OTTOMOTORS MIT TEILWEISER RÜCKFÜHRUNG VON ABGASEN UND ZUGEHÖRIGE MOTORISIERUNGSMITTEL
METHOD FOR CONTROLLING A SUPERCHARGED SPARK-IGNITION ENGINE WITH PARTIAL RECIRCULATION OF EXHAUST GASES AND ASSOCIATED MOTORISATION MEANS

(30) Priorité: 30.03.2017 FR 1752680
(43) Date de publication de la demande: 05.02.2020
(73) Titulaire: NEW H POWERTRAIN HOLDING, S.L.U., 47008 Valladolid (ES)
(72) Inventeur: PEREIRA, Luc, 18320 Cours des Barres (FR); BESANCON, Thomas, 92340 Bourg la Reine (FR)
(74) Mandataire: Renault Group
(86) Numéro de dépôt international: PCT/FR2018/050620
(87) Numéro de publication internationale: WO 2018/178536

(56) Documents cités:
- EP-A1- 2 317 100
- EP-A1- 2 806 143
- WO-A1-2017/017349

## Description

### DOMAINE TECHNIQUE DE L'INVENTION

L'invention concerne un procédé de contrôle d'un moteur à combustion interne, du type à allumage commandé (fonctionnant notamment à l'essence), suralimenté, et associé par ailleurs à au moins un circuit de recirculation partielle des gaz d'échappement à l'admission du moteur. Il concerne plus particulièrement un procédé de réglage d'un tel moteur qui est monté dans un véhicule automobile, quand le conducteur lève complètement le pied de la pédale d'accélérateur du véhicule.

Elle concerne également un dispositif de motorisation pour la mise en oeuvre d'un tel procédé.

### ETAT DE LA TECHNIQUE

De nombreux moteurs à combustion interne suralimentés modernes sont équipés d'au moins un circuit de recirculation partielle des gaz d'échappement à l'admission du moteur.

L'intérêt d'un tel circuit, couramment désigné par le terme de circuit EGR (de l'acronyme en langue anglaise pour : Exhaust Gas Recirculation), est largement connu et utilisé sur les moteurs de type diesel pour diminuer les émissions d'oxydes d'azote qui sont produites en abondance dans les gaz de combustion de ces moteurs.

Sur les moteurs du type à allumage commandé, c'est-à-dire fonctionnant notamment à l'essence, les circuits EGR viennent aussi à être de plus en plus utilisés afin de diminuer la consommation de carburant du moteur : d'une part, l'apport de gaz déjà brûlés à l'admission du moteur permet d'augmenter le rendement de combustion grâce à une diminution de la température de combustion qui est due à la dilution des gaz, et d'autre part, sur de nombreux points de fonctionnement du moteur, la charge d'air frais qui est nécessaire à la production du couple moteur peut être modifiée grâce à un apport de gaz recyclés plutôt qu'en actionnant un boîtier-papillon du moteur, ce qui diminue les pertes par pompage du moteur.

Or, la présence d'un circuit de recirculation partielle des gaz d'échappement à l'admission sur un moteur du type à allumage commandé pose un problème particulier par rapport à un moteur du même type qui n'est pas équipé d'un tel circuit, plus particulièrement quand le moteur est monté dans un véhicule automobile. En effet, en cas de lever de pied de la part du conducteur du véhicule, c'est-à-dire lorsque le conducteur relâche complètement le pied de la pédale d'accélérateur, par exemple sur une pente descendante, un tel lever de pied correspondant à une consigne de couple C moteur nulle ou voisine de zéro, il est connu de procéder à la fermeture presque complète du boîtier-papillon du moteur (qui sert à doser le débit d'air frais entrant dans le moteur), de procéder simultanément à la fermeture complète d'une vanne de réglage de débit des gaz recyclés (vanne EGR), et ensuite de couper l'injection de carburant dans le moteur dès lors qu'on constate que le couple C est suffisamment proche de zéro, par exemple quand une valeur de pression dans le collecteur d'admission du moteur est inférieure à un seuil prédéterminé.

Or, le temps de transfert des gaz d'échappement recyclés entre la vanne EGR et les cylindres du moteur est plus long que le temps de transfert de l'air frais entre le boîtier-papillon et les cylindres, en raison d'une longueur plus importante à parcourir.

Plus particulièrement lorsque le circuit EGR est un circuit de recirculation dit à basse pression (circuit EGR BP), les gaz d'échappement sont généralement prélevés en un point du circuit d'échappement qui est non seulement situé en aval de la turbine du turbocompresseur du moteur suralimenté, mais aussi en aval d'un catalyseur de dépollution des gaz d'échappement des gaz de combustion du moteur. Puis, s'agissant d'un circuit à basse pression, les gaz d'échappement sont renvoyés en un point du circuit d'admission du moteur qui est situé en amont du compresseur du turbocompresseur du moteur.

On comprend que la distance à parcourir par ces gaz est beaucoup plus longue que la distance à parcourir par l'air frais entre d'une part le boîtier-papillon, qui est situé en aval du compresseur, et d'autre part les cylindres du moteur, étant donné que le boîtier-papillon n'est séparé des cylindres du moteur que par un collecteur d'admission.

En raison de ce temps de transfert plus important des gaz d'échappement recyclés, la fermeture simultanée et pratiquement instantanée du boîtier-papillon et de la vanne de recirculation partielle des gaz d'échappement, qui est provoquée par un calculateur du moteur lors du lever de pied, est suivie d'une phase de fonctionnement transitoire du moteur dans laquelle on ne peut pas vider instantanément et simultanément les cylindres d'air frais et de gaz recyclés.

Au contraire, on observe au départ une augmentation du taux de gaz recyclés dans les cylindres, qui est dû au fait que la quantité de gaz recyclés diminue moins vite que la quantité d'air frais. Un tel déséquilibre a tendance à rendre la combustion instable dans les cylindres à faible couple. Cela entraîne des pics de combustion anormale (également connue sous le terme anglo-saxon de « misfire »), dont les conséquences sont un calage du moteur, plus particulièrement dans le cas où le conducteur ouvre l'embrayage en plus de lever le pied, et un risque de dégradation irréversible du catalyseur de dépollution du moteur (catalyseur trois voies). De plus, on augmente les émissions de polluants du moteur pendant la phase transitoire, à cause du déséquilibre entre les proportions d'air frais et de gaz déjà brûlés par rapport au fonctionnement en mode stabilisé sur lequel le moteur est réglé.

Ces différents phénomènes sont encore amplifiés par le fait que, lorsqu'on ferme le boîtier-papillon du moteur, on crée une dépression dans les cylindres du moteur, qui a tendance à retenir les gaz de combustion dans les chambres de combustion après chaque cycle de combustion au lieu de les évacuer vers le collecteur d'échappement du moteur. On augmente ainsi la recirculation interne des gaz (gaz IGR), qui se cumule avec l'augmentation non souhaitée de la recirculation externe des gaz par le circuit.

On connaît de l'état de la technique plusieurs procédés qui visent à adapter la combustion des moteurs à essence suralimentés pourvus d'un circuit de recirculation partielle des gaz d'échappement à l'admission, moteurs dans lesquels des gaz brûlés prennent la place de l'air frais dans les cylindres du moteur. Par exemple, la publication FR-A1-2981404 propose d'adapter la boucle de carburant à la boucle d'air en estimant la composition du mélange d'air et de gaz brûlés dans les chambres de combustion, en particulier en transitoire, en pilotant l'avance à l'allumage ou une vanne EGR.

Elle divulgue pour cela un procédé dans lequel on réalise une mesure relative de débit d'air ou de débit de gaz brûlés en amont du volume de mélange dans lequel l'air et les gaz brûlés se mélange, puis on estime la fraction massique des gaz brûlés présents dans le volume de mélange à partir de la mesure et d'un modèle de la dynamique de mélange dans le volume, et on estime un temps de transfert depuis le volume jusqu'au collecteur d'admission du moteur et on contrôle la combustion à partir de la fraction massique dans le collecteur d'admission.

Outre le fait que le modèle de la dynamique de mélange est complexe à mettre en oeuvre, ce procédé ne tient compte que du temps de transfert du mélange d'air et de gaz brûlés depuis le volume dans lequel ils sont mélangés jusqu'aux chambres de combustion, c'est-à-dire du volume qui est compris entre le point de débouché du circuit EGR dans le circuit d'admission, et les chambres de combustion. En d'autres termes, il ne tient pas compte du volume de gaz recyclés qui est compris entre la vanne EGR et ledit point de débouché, qui explique la différence de temps de transfert vers les chambres de combustion entre les gaz recyclés et l'air frais.

On notera enfin que ce document vise ensuite à régler classiquement le moteur à richesse 1, et ne traite pas du cas particulier d'un fonctionnement transitoire du moteur consécutif à un lever de pied de la part du conducteur. Le procédé qui y est exposé ne permet donc pas de résoudre les problèmes techniques visés par l'invention.

On connaît aussi de la publication EP-A1-2317100 un procédé de contrôle d'un moteur à combustion interne lors d'un arrêt du moteur, le moteur étant associé à un système d'arrêt et de redémarrage automatiques commandé par un calculateur apte à provoquer une requête d'arrêt du moteur. Le procédé prévoit une fermeture partielle du passage des gaz d'admission du moteur vers un répartiteur du moteur, qui peut consister en une fermeture partielle d'un boîtier-papillon du moteur, ou d'une vanne d'un circuit de recirculation partielle des gaz d'échappement à l'admission (vanne EGR) du moteur, ou des deux en combinaison. La vanne EGE et le boîtier-papillon sont ultérieurement fermés de manière complète après des durées prédéterminées, la fermeture du boîtier-papillon intervenant après celle de la vanne EGR. Cependant, à partir de la requête d'arrêt du moteur, l'injection de carburant est augmentée de manière à maintenir le régime de ralenti du moteur. La fermeture de la vanne EGR et celle du boîtier-papillon se produisent avant que l'injection de carburant soit interrompue.

### RESUME DE L'INVENTION

L'invention propose de remédier de manière simple aux problèmes de calage moteur, de fiabilité du catalyseur de dépollution du moteur et d'émissions polluantes exposés plus haut.

Elle propose pour cela un procédé de contrôle d'un moteur à allumage commandé du type suralimenté et associé à au moins un circuit de recirculation partielle des gaz d'échappement à l'admission du moteur, ledit moteur étant monté sur un véhicule automobile, ledit procédé étant mis en oeuvre lorsqu'un conducteur du véhicule relâche la pédale d'accélérateur du véhicule, et comprenant des étapes au cours desquelles : on ferme presque complètement un boîtier-papillon de réglage du débit des gaz dans le moteur ; on ferme une vanne de réglage du débit des gaz d'échappement recyclés à l'admission du moteur ; et, on coupe l'injection de carburant du moteur.

Le procédé est caractérisé en ce qu'il comporte, successivement ;
- Une étape au cours de laquelle on constate que la pédale d'accélérateur est relâchée ;
- Une étape au cours de laquelle on ferme ladite vanne de réglage du débit des gaz recyclés, et on ne ferme pas le boîtier-papillon ;
- Une étape au cours de laquelle on coupe l'injection de carburant dans au moins un cylindre du moteur ;
- Une étape de fermeture presque complète du boîtier-papillon, après une durée prédéterminée après la fermeture de la vanne de débit des gaz recyclés ; et,
- Une étape de coupure de l'injection de carburant dans les cylindres qui étaient le cas échéant encore alimentés avant la fermeture du boîtier-papillon.

### BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :
- la figure 1 est une vue schématique illustrant un dispositif de motorisation pour la mise en oeuvre du procédé selon l'invention ;
- la figure 2 est un organigramme illustrant les différentes étapes d'un procédé de contrôle selon un mode de réalisation de l'invention, dans un premier mode de réalisation ;
- la figure 3 est un organigramme du procédé de contrôle dans un deuxième mode de réalisation ; et,

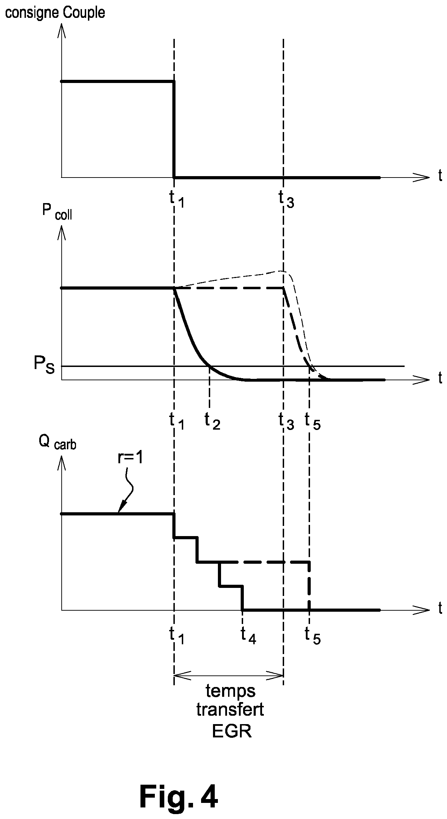

- la figure 4 est un ensemble de trois graphiques illustrant l'évolution d'une consigne de couple, de pression de collecteur et de débit de carburant injecté dans le moteur, dans un procédé selon l'invention.

### DESCRIPTION DETAILLEE DES FIGURES

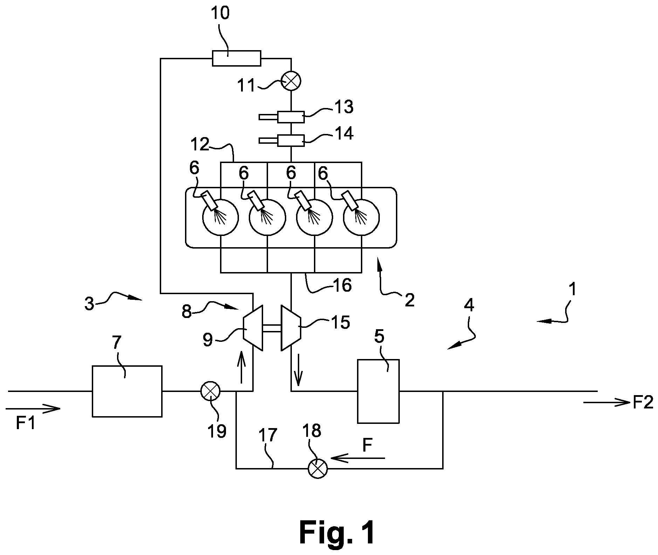

La figure 1 représente un dispositif de motorisation 1 apte à la mise en oeuvre du procédé selon l'invention, qui équipe notamment un véhicule automobile. Il comprend un moteur à combustion interne 2, du type à allumage commandé (fonctionnant notamment à l'essence), du type suralimenté, qui se présente ici de manière non limitative sous la forme d'un moteur à quatre cylindres en ligne.

Pour son fonctionnement, un tel moteur à allumage commandé 2 aspire de l'air dans le sens de la flèche F1 par l'intermédiaire d'un circuit d'admission 3, et rejette ses gaz d'échappement par un circuit d'échappement 4 afin de les diriger vers un système de dépollution 5 des gaz de combustion du moteur, par exemple un catalyseur trois voies 5, puis de les évacuer dans l'atmosphère extérieure dans le sens de la flèche F2.

Le moteur consomme également du carburant, notamment de l'essence, qui est amenée au moteur grâce à un système d'injection (non représenté) et à au moins un injecteur 6 de carburant par cylindre apte à injecter le carburant directement dans chacun des cylindres, plus précisément dans chaque chambre de combustion délimitée dans chaque cylindre du moteur. En variante non représentée, chaque cylindre peut être alimenté par un injecteur individuel qui injecte le carburant dans une conduite d'admission en amont de chaque cylindre. Une bougie d'allumage (non représentée) débouche également dans chacune des chambres de combustion du moteur.

Dans le circuit d'admission d'air 3, un filtre à air 7 permet d'éliminer les poussières contenues dans l'air. S'agissant dans le cadre de l'invention d'un moteur 2 suralimenté, le dispositif de motorisation comprend par ailleurs un turbocompresseur 8 dont le compresseur 9 est monté en aval du filtre à air 7. De plus, il est possible qu'un échangeur de température 10 soit disposé à l'aval du compresseur 8. Le circuit d'amission 3 comprend encore, en aval du compresseur 8, une première vanne de réglage 11 du débit des gaz entrant dans le moteur 2, ou boîtier-papillon 11, et un collecteur d'admission 12, ou répartiteur 12, du moteur. Un capteur de pression 13 des gaz d'admission Pcoll et un capteur de température 14 des gaz d'admission Tcoll sont interposés dans le circuit d'admission 3 entre le boîtier-papillon 11 et le collecteur d'admission 12. Ils peuvent aussi être montés sur le collecteur d'admission 12.

Le compresseur 9 est entraîné par une turbine 15 du turbocompresseur 8, par l'intermédiaire d'un arbre commun. La turbine 15 est montée dans le circuit d'échappement 4 du moteur, en aval d'un collecteur d'échappement 16 du moteur, plus précisément entre le collecteur d'échappement 16 et le dispositif de dépollution 5.

Classiquement, le turbine 15 peut être associée à une conduite de dérivation à l'échappement (non représentée) qui contourne la turbine 15 et qui comporte une vanne de décharge à l'échappement (également appelée vanne « waste gâte ») pour pouvoir limiter l'énergie apportée par les gaz d'échappement à la turbine 15, et donc pour pouvoir ajuster la pression à la sortie du compresseur 9. En variante, le turbocompresseur 8 peut comporter une turbine à géométrie variable, c'est-à-dire pourvue d'ailettes d'inclinaison variable permettant également de moduler l'énergie prélevée sur les gaz d'échappement.

De plus, dans le cadre de l'invention, le moteur thermique 2 comporte au moins un circuit de recirculation partielle des gaz d'échappement à l'admission, plus particulièrement un circuit dit EGR à haute pression et/ou un circuit EGR à basse pression (EGR : acronyme anglais pour « Exhaust Gas Recirculation »).

Sur la figure 1, il s'agit de manière non limitative d'un circuit EGR à basse pression, dans le cadre duquel le procédé selon l'invention est le plus bénéfique. Il se présente sous la forme d'une conduite de recirculation 17 qui prend naissance en un point du circuit d'échappement 4 situé en aval du dispositif de dépollution 5, et dont l'autre extrémité débouche en un point du circuit d'admission 3 situé en amont du compresseur 9.

La conduite de recirculation 17 est pourvue d'une vanne de recirculation 18, ou vanne EGR 18, qui permet d'ajuster la quantité de gaz recyclés. On notera également que, pour qu'une circulation de gaz d'échappement puisse avoir lieu dans la conduite dans le sens indiqué par la flèche F, il faut que la pression au point de débouché soit plus faible qu'au point de prélèvement des gaz. A cet effet, il est possible qu'une vanne supplémentaire 19 soit montée dans le circuit d'admission 3 du moteur, en amont du point de débouché de la conduite EGR 17 dans le circuit d'admission. Quand cela est nécessaire, on peut réduire le degré d'ouverture de cette vanne supplémentaire, de manière à créer une dépression dans le circuit d'admission 3 au point de débouché de la conduite de recirculation 17, apte à augmenter la circulation des gaz d'échappement vers ce point.

De manière connue en soi, le moteur 2 fonctionne le plus généralement à richesse 1 pour la production du couple moteur. Par exemple, on règle l'angle αpap du boîtier-papillon 11 et la puissance de la turbine 15 en fonction de la pression Pcoll et de la température Tcoll de collecteur pour obtenir un débit massique de gaz donné dans les cylindres du moteur, et la vanne EGR 18 pour ajuster la proportion des gaz brûlés dans ledit débit de gaz. On règle la richesse en boucle fermée en ajustant le temps d'injection des injecteurs correspondant à un débit de carburant Qcarb donné dans le moteur, grâce aux indications d'au moins un capteur à oxygène (non représenté) monté en amont du catalyseur 5. On règle aussi une valeur de l'avance à l'allumage en faisant jaillir une étincelle entre les électrodes des bougies d'allumage à un moment précis par rapport au point mort haut dans chaque cylindre.

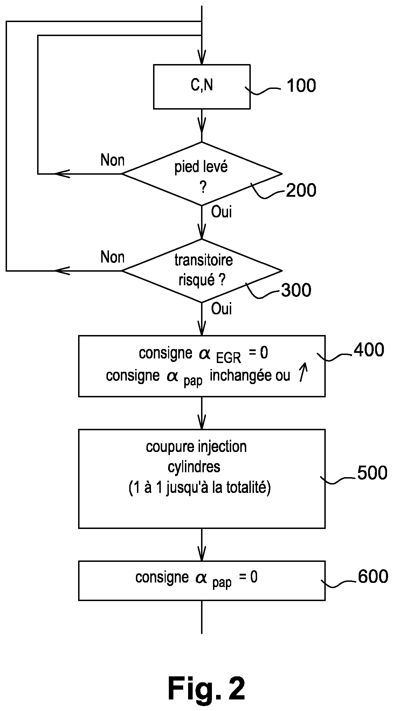

La figure 2 illustre les différentes étapes d'un premier mode de réalisation du procédé de contrôle selon l'invention, utilisant un dispositif de motorisation 1 tel qu'il vient d'être exposé, dans lequel on règle les paramètres de fonctionnement du moteur quand le conducteur lève le pied de la pédale d'accélérateur du véhicule. Il est mis en oeuvre de manière classique par un calculateur du moteur.

Le procédé débute par une étape 100 au cours de laquelle on détermine une valeur du couple C courant du moteur et du régime N du moteur. Le moteur est réglé à richesse 1. Par exemple le couple peut être obtenu à partir de la pression de collecteur Pcoll mesurée par le capteur de pression 13, de la température de collecteur Tcoll mesurée par le capteur de température 14, et de l'angle d'ouverture αpap du boîtier-papillon 11 ainsi que de l'angle d'ouverture αegr de la vanne EGR 18.

A l'étape suivante 200, on vérifie si le véhicule est dans une situation de lever de pied. On peut par exemple vérifier que l'enfoncement de la pédale d'accélérateur est nul, grâce à un capteur ou à un contacteur monté sur cette dernière.

Si ce n'est pas le cas, le procédé reprend à l'étape 100. Dans le cas contraire, le procédé oriente vers une étape 300 dans laquelle on vérifie si une telle situation de lever de pied constitue un cas de fonctionnement transitoire risqué pour le moteur, en d'autres termes, si les problèmes mentionnés plus haut de calage, de fiabilité du catalyseur 5 et de pollution, ont une forte probabilité de se produire. Cela correspond généralement au fait que le couple C et le régime N qui ont été relevés à l'étape 100 se trouvent dans des domaines respectifs de faible charge et de bas régime.

Si ce n'est pas le cas, le procédé reprend à l'étape 100, et le moteur continue d'être réglé normalement à richesse 1, le temps d'injection de chaque injecteur étant réglé de manière sensiblement identique de telle sorte que le débit total de carburant Qcarb dans le moteur permette d'obtenir un signal de capteur d'oxygène correspondant à un mélange stoechiométrique. Dans le cas contraire, le procédé se poursuit par une succession d'étapes qui sont spécifiques au procédé selon l'invention.

Au cours d'une étape 400, à un instant t1 qui correspond au moment où la situation de lever de pied et de fonctionnement transitoire risqué est reconnue, le calculateur du moteur passe instantanément une consigne d'angle d'ouverture αegr de la vanne EGR 18 à zéro, en d'autres termes il ferme complètement ladite vanne. D'autre part, dans un premier mode de réalisation de l'invention, il ne modifie pas la consigne d'angle d'ouverture αpap du boîtier-papillon 11, en d'autres termes, il maintient inchangée la position dudit boîtier-papillon par rapport à la position de l'étape 100.

Dans une variante avantageuse de l'étape 400, le calculateur augmente la consigne d'angle d'ouverture αpap du boîtier-papillon 11 par rapport à la position de l'étape 100, c'est-à-dire qu'il ouvre davantage le boîtier-papillon. Cette variante permet d'augmenter davantage la pression Pcoll de collecteur et de favoriser l'évacuation des gaz de combustion du moteur vers le collecteur d'échappement 16, diminuant ainsi les gaz recirculés internes (gaz IGR).

En d'autres termes, dans tous les cas de figure, on ne procède à aucune fermeture du boîtier-papillon 11.

A l'étape 500, quel que soit l'option retenue pour l'angle d'ouverture du boîtier-papillon à l'étape 400, on procède à une coupure de l'injection de carburant dans les cylindres. Plus précisément, on arrête d'injecter le carburant d'abord dans un premier cylindre, puis dans un deuxième, et ainsi de suite jusqu'au dernier cylindre, par exemple à intervalles de temps réguliers. Dans les cylindres qui sont encore alimentés en carburant au cours de cette étape, le temps d'injection de chacun des injecteurs alimentant encore ces cylindres actif est figé, c'est-à-dire réglé en boucle ouverte sur la valeur de temps d'injection du début de l'étape 500.

Le procédé comprend encore une étape 600 de fermeture presque complète du boîtier-papillon 11, qui est réalisée un instant t3 prédéterminé, après l'écoulement d'une durée prédéterminée depuis l'instant t1 où l'on a fermé la vanne EGR 18, ladite durée prédéterminée correspondant au temps de transfert des gaz recyclés entre la vanne EGR 18 et les cylindres du moteur. Cette durée peut être prédéterminée par des essais au banc en fonction du couple C et du régime précédant le pied levé.

Le moteur reste ensuite réglé dans cet état correspondant à l'étape 600 (boîtier-papillon pratiquement fermé et vanne EGR complètement fermée ; pas d'injection de carburant) jusqu'à ce que la situation de pied levé prenne fin, c'est-à-dire au réattelage du moteur, lors d'un appui sur la pédale d'accélérateur.

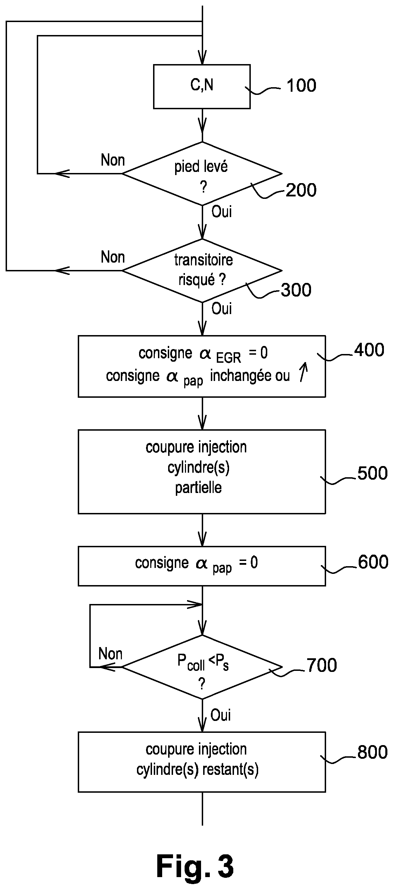

La figure 3 illustre les différentes étapes d'un deuxième mode de réalisation du procédé de contrôle selon l'invention. Les étapes 100 à 400 du procédé selon ce deuxième mode sont identiques à celle du premier mode.

Le procédé se poursuit par une étape 500 dans laquelle l'injection de carburant dans au moins un cylindre est coupée, le ou les cylindres restants continuant d'être alimentés en carburant. En d'autres termes, on procède d'abord à la coupure simultanée de l'injection dans un sous-groupe de cylindres qui comprend au moins un cylindre, mais moins que la totalité des cylindres.

Il comprend ensuite une étape 600, identique à celle du premier mode, de fermeture presque complète du boîtier-papillon 11, qui est réalisée un instant t3 prédéterminé, après l'écoulement d'une durée prédéterminée depuis l'instant t1 où l'on a fermé la vanne EGR 18, ladite durée prédéterminée correspondant au temps de transfert des gaz recyclés entre la vanne EGR 18 et les cylindres du moteur.

Le procédé se poursuit par une étape 700 dans laquelle on mesure la pression Pcoll qui règne dans le collecteur d'admission 12. Celle-ci commence à baisser dès lors qu'on ferme le boîtier-papillon 11. On compare cette valeur de pression avec un seuil de pression Ps, et dès que ladite pression devient inférieure audit seuil, le procédé passe à l'étape 800 au cours de laquelle l'injection de carburant dans les cylindres est complètement arrêtée. En d'autres termes, on coupe simultanément l'injection dans les cylindres du moteur qui ne faisaient pas partie du sous-groupe de cylindres qui ont été coupés à l'étape 500.

La figure 3 est un ensemble de trois graphiques qui illustrent le déroulement du procédé selon l'invention, dans le premier et dans le deuxième mode de réalisation, et qui le compare à un procédé classique de l'état de la technique. De bas en haut :
- Le premier graphique est une courbe d'évolution temporelle de consigne de couple, résultant de l'enfoncement de la pédale d'accélérateur ;
- Le deuxième graphique représente trois courbes d'évolution temporelle de la pression de collecteur Pcoll :
   I. La courbe en trait continu épais illustre l'évolution de la pression Pcoll dans le cas d'un procédé selon l'état de la technique, dans lequel, sur un lever de pied, on ferme aussitôt le papillon et la vanne EGR, puis on coupe l'injection de carburant quand la pression devient inférieure à un seuil.
   II. La courbe en trait interrompu épais illustre l'évolution de la pression Pcoll dans le procédé selon l'invention, dans le mode de réalisation où on maintient l'angle du boîtier-papillon à l'étape 400.
   III. La courbe en trait interrompu fin illustre l'évolution de la pression Pcoll dans le procédé selon l'invention, dans le mode de réalisation où on augmente l'angle du boîtier-papillon à l'étape 400.
- Le troisième graphique illustre l'évolution du débit de carburant dans le moteur conformément au procédé selon l'invention, la courbe en trait gras continu correspondant au premier mode de réalisation et la courbe en trait gras interrompu correspondant au deuxième mode.

Sur le premier graphique, on constate qu'un lever de pied à l'instant t1 se traduit par une consigne de couple C moteur qui passe instantanément de la valeur qui correspondait à l'enfoncement de la pédale d'accélérateur avant le lever de pied, à zéro.

Sur le deuxième graphique, avec le procédé selon l'état de la technique, la fermeture du boîtier-papillon dès l'instant t1 du lever de pied se traduit par une chute de la pression Pcoll, qui passe très rapidement du niveau correspondant au couple réel du moteur qui était disponible avant le début du lever de pied, à une valeur inférieure au seuil Ps dès l'instant t2 où on coupe l'injection de carburant.

En revanche, avec le procédé selon l'invention dans lequel on maintient l'ouverture du papillon, la pression Pcoll reste constante jusqu'à l'instant t3 où on commence à fermer le boîtier-papillon. Dans le deuxième mode de réalisation où l'on augmente l'ouverture du papillon, la pression Pcoll augmente jusqu'à ce même instant t3. Dans les deux cas, dès que la consigne d'ouverture du boîtier-papillon passe à zéro, la pression de collecteur Pcoll commence à diminuer.

Le débit de carburant Qcarb, quant à lui (voir le troisième graphique), diminue progressivement par paliers avec la coupure de l'injection de carburant cylindre par cylindre.

Dans le premier mode de réalisation qui correspond au trait gras continu, on coupe d'abord l'injection dans un premier cylindre, puis dans un deuxième, etc. , jusqu'à la coupure de l'injection dans le dernier cylindre qui intervient à un instant t4 qui se produit par exemple avant l'instant t3 comme représenté ici, ou en même temps que l'instant t3.

Dans le deuxième mode de réalisation qui correspond au trait gras interrompu, on coupe d'abord l'injection d'au moins un cylindre (ici : deux cylindres sont coupés sur les quatre cylindres du moteur représenté sur la figure 1) à l'étape 400. L'arrêt du ou des cylindres non encore coupés à l'étape 400 (ici : deux cylindres restants) intervient à l'instant t5 correspondant à l'atteinte du seuil Ps de pression par la pression de collecteur Pcoll, visible sur le graphique du milieu.

## Revendications

1. Procédé de contrôle d'un moteur (2) à allumage commandé du type suralimenté et associé à au moins un circuit de recirculation (17) partielle des gaz d'échappement à l'admission du moteur, ledit moteur étant monté sur un véhicule automobile, ledit procédé étant mis en oeuvre lorsqu'un conducteur du véhicule relâche la pédale d'accélérateur du véhicule, et comprenant des étapes au cours desquelles ; on ferme presque complètement un boîtier-papillon (11) de réglage du débit des gaz dans le moteur ; on ferme une vanne (18) de réglage du débit des gaz d'échappement recyclés à l'admission du moteur ; et, on coupe l'injection de carburant du moteur, **CARACTERISE EN CE QU'**il comporte, successivement ;
- Une étape (200) au cours de laquelle on constate que la pédale d'accélérateur est relâchée ;
- Une étape (400) au cours de laquelle on ferme ladite vanne (18) de réglage du débit des gaz recyclés, et on ne ferme pas le boîtier-papillon (11) ;
- Une étape (500) au cours de laquelle on coupe l'injection de carburant dans au moins un cylindre du moteur ;
- Une étape (600) de fermeture presque complète du boîtier-papillon (11), après une durée prédéterminée après la fermeture de la vanne (18) de débit des gaz recyclés ; et,
- Une étape (800) de coupure de l'injection de carburant dans les cylindres qui étaient le cas échéant encore alimentés avant la fermeture du boîtier-papillon (11).

2. Procédé selon la revendication 1, **caractérisé en ce que** lors de l'étape (400) de fermeture de la vanne (18) de réglage de débit des gaz recyclés, on maintient constante l'ouverture du boîtier-papillon (11).

3. Procédé selon la revendication 1, **caractérisé en ce que** lors de l'étape (400) de fermeture de la vanne (18) de réglage de débit des gaz recyclés, on augmente l'ouverture du boîtier-papillon (11).

4. Procédé selon l'une quelconque des revendications précédentes, **caractérisé en ce que** la durée prédéterminée qui sépare la fermeture de la vanne (18) de réglage de débit des gaz recyclés et la fermeture presque complète du boîtier-papillon (11) est sensiblement égale au temps de transfert des gaz recyclés entre la vanne (18) de réglage de débit desdits gaz et le moteur.

5. Procédé selon la revendication 4, **caractérisé en ce que** la durée est prédéterminée par des essais en fonction du couple (C) et du régime (N) du moteur.

6. Procédé selon l'une quelconque des revendications précédentes, **caractérisé en ce que** l'étape (500) de coupure de l'injection de carburant dans les cylindres se fait progressivement cylindre par cylindre, tous les cylindres étant coupés avant la fermeture ou en même temps que la fermeture du boîtier-papillon (11).

7. Procédé selon l'une quelconque des revendications 1 à 5, **caractérisé en ce que** l'étape (500) de coupure de l'injection de carburant dans les cylindres est partielle sur un sous-groupe de cylindres du moteur, les cylindres restants étant coupés après la fermeture presque complète du boîtier-papillon.

8. Dispositif de motorisation pour la mise en oeuvre du procédé selon l'une quelconque des revendications précédentes, comportant un moteur (2) à allumage commandé du type suralimenté associé à au moins un circuit de recirculation partielle (17) des gaz d'échappement à l'admission, **caractérisé en ce que** ledit circuit est un circuit de recirculation partielle à basse pression.

## Patentansprüche

1. Verfahren zum Steuern eines aufzuladenden Fremdzündungsmotors (2), dem mindestens ein Teilrückführungskreislauf (17) der Abgase zum Einlass des Motors zugeordnet ist, wobei der Motor in ein Kraftfahrzeug eingebaut ist, wobei das Verfahren durchgeführt wird, wenn ein Fahrer des Fahrzeugs den Druck auf das Gaspedal des Fahrzeugs zurücknimmt, und es die folgenden Schritte umfasst: nahezu vollständiges Schließen einer Drosselklappe (11) zur Einstellung des Gasstroms im Motor; Schließen eines Ventils (18) zum Einstellen der Strömungsrate der zum Motoreinlass rückgeführten Abgase; und Unterbrechen der Kraftstoffeinspritzung des Motors,
**DADURCH GEKENNZEICHNET, DASS** es nacheinander umfasst:
- einen Schritt (200), bei dem festgestellt wird, dass der Druck auf das Gaspedal zurückgenommen wird;
- einen Schritt (400), bei dem das Ventil (18) zum Einstellen der Strömungsrate der rückgeführten Gase geschlossen wird und die Drosselklappe (11) nicht geschlossen wird;
- einen Schritt (500), bei dem die Kraftstoffeinspritzung in mindestens einen Zylinder des Motors unterbrochen wird;
- einen Schritt (600) des nahezu vollständigen Schließens der Drosselklappe (11) nach einer vorbestimmten Zeitdauer nach dem Schließen des Ventils (18) für den Strom rückgeführter Gase; und,
- einen Schritt (800) zum Unterbrechen der Kraftstoffeinspritzung in die Zylinder, die ggf. vor dem Schließen der Drosselklappe (11) noch mit Kraftstoff versorgt wurden.

2. Verfahren nach Anspruch 1, **dadurch gekennzeichnet, dass** während des Schritts (400) des Schließens des Ventils (18) zum Einstellen der Strömungsrate der rückgeführten Gase die Öffnung der Drosselklappe (11) konstant gehalten wird.

3. Verfahren nach Anspruch 1, **dadurch gekennzeichnet, dass** während des Schritts (400) des Schließens des Ventils (18) zum Einstellen der Strömungsrate der rückgeführten Gase die Öffnung der Drosselklappe (11) größer wird.

4. Verfahren nach einem der vorstehenden Ansprüche,
**dadurch gekennzeichnet, dass** die vorgegebene Zeitdauer, die zwischen dem Schließen des Ventils (18) zum Einstellen der Strömungsrate der rückgeführten Gase und dem nahezu vollständigen Schließen der Drosselklappe (11) liegt, im Wesentlichen gleich der Beförderungszeit der rückgeführten Gase zwischen dem Ventil (18) zum Einstellen der Strömungsrate dieser Gase und dem Motor ist.

5. Verfahren nach Anspruch 4, **dadurch gekennzeichnet, dass** die Dauer durch Tests in Abhängigkeit von dem Drehmoment (C) und der Drehzahl (N) des Motors vorbestimmt wird.

6. Verfahren nach einem der vorstehenden Ansprüche,
**dadurch gekennzeichnet, dass** der Schritt (500) des Unterbrechens der Kraftstoffeinspritzung in die Zylinder schrittweise Zylinder für Zylinder erfolgt, wobei alle Zylinder vor dem Schließen oder gleichzeitig mit dem Schließen der Drosselklappe (11) abgestellt werden.

7. Verfahren nach einem der Ansprüche 1 bis 5,
**dadurch gekennzeichnet, dass** der Schritt (500) des Unterbrechens der Kraftstoffeinspritzung in die Zylinder teilweise für eine Untergruppe von Zylindern des Motors erfolgt, wobei die verbleibenden Zylinder nach dem fast vollständigen Schließen des Drosselklappengehäuses abgestellt werden.

8. Motorisierungsvorrichtung zum Durchführen des Verfahrens nach einem der vorstehenden Ansprüche, umfassend einen aufzuladenden Fremdzündungsmotor (2), dem mindestens ein Teilrückführungskreislauf (17) der Abgase zum Einlass zugeordnet ist, **dadurch gekennzeichnet, dass** es sich bei diesem Kreislauf um einen Niederdruck-Teilrückführungskreislauf handelt.

## Claims

1. A method for controlling a spark-ignition engine (2) of the supercharged type, associated with at least one circuit for partial recirculation (17) of exhaust gases to the engine intake, said engine being mounted on a motor vehicle, said method being implemented when a driver of the vehicle releases the accelerator pedal of the vehicle, and comprising steps during which; a throttle body (11) for regulating the flow of gases into the engine is almost completely closed; a valve (18) for regulating the flow of exhaust gases recycled at the engine intake is closed; and, fuel injection to the engine is cut off,
**CHARACTERIZED IN THAT** it comprises, successively:
- A step (200) during which the accelerator pedal is released;
- A step (400) during which said valve (18) for regulating the flow of exhaust gases is closed, and the throttle body (11) is not closed;
- A step (500) during which fuel injection is cut off in at least one cylinder of the engine;
- A step (600) of almost completely closing the throttle body (11), after a predetermined time following closure of the recycled gas flow valve (18); and,
- A step (800) of cutting off fuel injection to cylinders which may still have been supplied with fuel before the throttle body (11) was closed.

2. The method according to claim 1, **characterized in that** during the step (400) of closing the valve (18) for regulating the flow of recycled gases, the openness of the throttle body (11) is kept constant.

3. The method according to claim 1, **characterized in that** during the step (400) of closing the valve (18) for regulating the flow of recycled gases, the openness of the throttle body (11) is increased.

4. The method according to any of the preceding claims, **characterized in that** the predetermined duration between the closure of the valve (18) for regulating the flow of recycled gases and the almost complete closure of the throttle body (11) is substantially equal to the time taken to transfer the recycled gases between the valve (18) for regulating the flow of recycled gases and the engine.

5. The method according to claim 4, **characterized in that** the duration is predetermined by tests as a function of the torque (C) and speed (N) of the engine.

6. The method according to any of the preceding claims,
**characterized in that** the step (500) of cutting off fuel injection to the cylinders is carried out gradually cylinder by cylinder, all the cylinders being cut off before or at the same time as the closure of the throttle body (11).

7. The method according to any one of claims 1 to 5, **characterized in that** the step (500) of cutting off fuel injection to the cylinders is partial on a subgroup of engine cylinders, the remaining cylinders being cut off after the throttle body has been almost completely closed.

8. A motorization device for implementing the method according to any of the preceding claims, comprising a spark-ignition engine (2) of the supercharged type associated with at least one circuit for partial recirculation (17) of exhaust gases to the intake, **characterized in that** said circuit is a low-pressure partial recirculation circuit.
